# EUROPEAN PATENT SPECIFICATION

(11) **EP 1 025 680 B1**
(45) Date of publication and mention of the grant of the patent: **26.01.2005**
(21) Application number: 98953670.1
(22) Date of filing: 16.10.1998
(51) Int. Cl.: H04L 12/24, H04L 12/26, H04L 12/56, H04L 29/14

(54) **METHOD AND SYSTEM FOR FAULT-TOLERANT NETWORK CONNECTION SWITCHOVER**
VERFAHREN UND SYSTEM FÜR FEHLERTOLERANTE NETZVERBINDUNGSUMSCHALTUNG
PROCEDE ET SYSTEME DE COMMUTATION DE CONNEXION DE RESEAU INSENSIBLE AUX PANNES

(30) Priority: 20.10.1997 US 62581 P; 21.10.1997 US 62984 P; 14.04.1998 US 59896
(43) Date of publication of application: 09.08.2000
(73) Proprietor: THE FOXBORO COMPANY, Foxboro, MA 02035 (US)
(72) Inventor: HIRST, Michael, D., Lakeville, MA 02347 (US); GALE, Alan, A., Carver, MA 02330 (US); CUMMINGS, Gene, A., Sherborn, MA 01770 (US)
(74) Representative: Greenwood, John David
(86) International application number: PCT/US1998/021984
(87) International publication number: WO 1999/021322

(56) References cited:
- US-A- 4 692 918
- US-A- 5 586 112
- STEVENS ET AL: "TCP/IP ILLUSTRATED, Vol. 1. THE PROTOCOLS" TCP/IP ILLUSTRATED, VOL. 1: THE PROTOCOLS, vol. 1, pages 85-96, XP002106390 STEVENS;W R

## Description

### Technical Field

The present invention relates, in general, to fault-tolerant computing. More specifically, the present invention relates to methods and systems for quickly switching between network connections.

### Background of the Invention

The reliability of computer based applications continues to be an important consideration. Moreover, the distribution of applications across multiple computers, connected by a network, only complicates overall system reliability issues. One critical concern is the reliability of the network connecting the multiple computers. Accordingly, fault-tolerant networks have emerged as a solution to insure computer connection reliability.

In many applications, the connection between a single computer and a network is a critical point of failure. That is, often a computer is connected to a network by a single physical connection. Thus, if that connection were to break, all connectivity to and from the particular computer would be lost. Multiple connections from a single computer to a network have therefore been implemented, but not without problems.

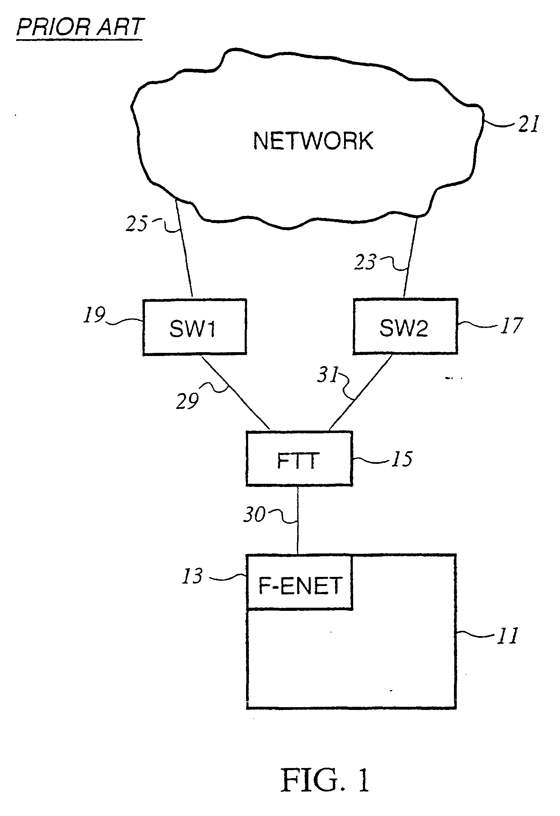

Turning to Fig. 1. a diagram of a computer 11 connected to a network 21 is shown. Computer 11 includes a network interface, for example, a fast-Ethernet interface 13. A connection 30 links fast-Ethernet interface 13 with a fault-tolerant transceiver 15. Fault tolerant transceiver 15 establishes a connection between connection 30 and one of two connections 29 and 31 to respective fast-Ethernet switches 19 and 17 (these "switches" as used herein are SNMP managed network Switches). Switches 17 and 19 are connected in a fault-tolerant matter to network 21 through connections 23 and 25.

Fault-tolerant transceiver 15 may be purchased from a number of vendors including, for example. a Digi brand, model MIL-240TX redundant port selector: while fast-Ethemet switches 17 and 19 may also be purchased from a number of vendors and may include, for example. a Cisco brand, model 5000 series fast-Ethernet switch.

Operationally. traffic normally passes from fast-Ethernet interface 13 through fault-tolerant transceiver 15, and over a primary connection 29 or 31 to respective switch 17 or 19 and on to network 21. The other of connections 29 and 31 remains inactive. Network 21 and switches 17 and 19 maintain routing information that directs traffic bound for computer 11 through the above-described primary route.

In the event of a network connection failure, fault-tolerant transceiver 15 will switch traffic to the other of connection 29 and 31. For example, if the primary connection was 31, and connection 31 broke, fault-tolerant transceiver 15 would switch traffic to connection 29.

When, for example, traffic from computer 11 begins passing over its new, backup connection 29 through switch 19, network routing has to be reconstructed such that traffic bound for computer 11 is routed by the network to the port on switch 19 that connection 29 is attached to. Previously, the routing directed this traffic to the port on switch 17 that connection 31 was attached to.

Several problems arise from the above-described operation. First, the rebuilding of network routing to accommodate passing traffic over the back-up connection may take an extended period of time. This time may range from seconds to minutes, depending upon factors including network equipment design and where the fault occurs. Second, fault-tolerant transceiver 15 is only sensitive to a loss of the physical receive signal on the wire pair from the switches (e.g., 17 and 19) to the transceivers. It is not sensitive to a break in the separate wire pair from the transceiver to the switch. Also, it is sensitive only to the signal from the switch to which it is directly attached and does not test the backup link for latent failures which would prevent a successful recovery. This technique also fails to test the switches themselves.

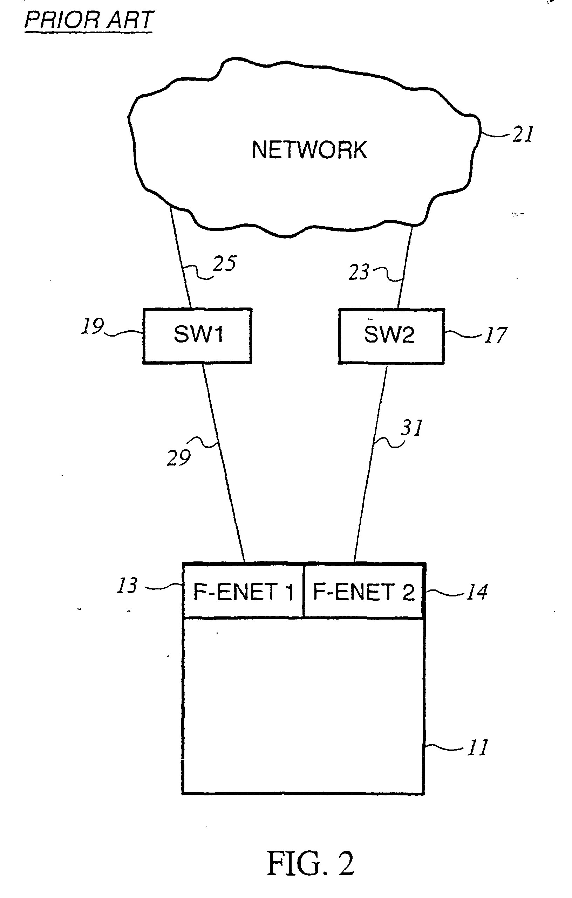

Another example of a previous technique for connecting a computer 11 to a network 21 is shown in Fig. 2. Network switches 17 and 19 and their connection to each other and network 21 is similar to that shown in Fig. 1. However, in this configuration, each of switches (e.g., 17 and 19) connects to its own fast-Ethernet interface (e.g., 13 and 14) within computer 11.

Operationally, only one of interfaces 13 and 14 is maintained active at any time. When physical signal is lost to the active interface, use of the interface with the failed connection is ceased, and connectivity begins through the other, backup interface. The backup interface assumes the addressing of the primary interface and begins communications. Unfortunately, this technique shares the same deficiencies with that depicted in Fig. 1. Rerouting can take an extended period of time, and the only failure mode that may be detected is that of a hard, physical connection failure from the switch to the transceiver.

The present invention is directed toward solutions to the above-identified problems.

US-A-4, 692,918 discloses a method of managing network routing and a system for managing network routing having the features of the preambles of claims 1 and 7, respectively. The method and system of the present invention are characterised by the features of the characterizing portions of these claims with optional features recited in the dependent claims.

If the network connectivity determined is unacceptable, roles of the primary and secondary connections are swapped to establish new primary and secondary connections. A message is then sent with an origin address of the first node to the second node over the new primary connection. The origin address of this message facilitates the network nodes learning about routing to the first node over the new primary connection.

As an enhancement, the first node may include a first port connected to the primary connection and a second port connected to the secondary connection. The first and second ports have first and second network addresses, respectively; and the first node has a system network address. The periodic communication may be transmitted from the first port of the first node with an origin address of the first port. Further, the origin address of the message sent if network connectivity was unacceptable may be the system network address of the first node. Also, the periodic communication may be a ping message having the first network address of the first port as its origin address. This ping message may be destined for the second or third node.

If the ping message fails, another ping message may be sent from the second port to the other of the second and third nodes, not previously pinged. If this ping message is successful, the method may include swapping the roles of the primary and secondary connections and pinging the second node over the new primary link.

As yet another enhancement. the status of the connection between the second port and the other of the second and third nodes to which the previous ping was sent is determined.

In another aspect. the present invention includes a system for implementing methods corresponding to those described hereandabove. In this embodiment a link manager may be attached to the computer and may provide connectivity between the computer and the primary and secondary connections. As implementation options, the link manager may be, for example, integral with the computer (e.g., on a main board of the computer), on an expansion board of the computer, or external to the computer. Also, the computer may be an operator workstation or a controller such as, for example, an industrial or environmental controller.

### Brief Description of the Drawings

The subject matter regarded as the present invention is particularly pointed out and distinctly claimed in the concluding portion of the specification. The invention, however, both as to organization and method of practice, together with further objects and advantages thereof, may best be understood by reference to the following detailed description taken in conjunction with the accompanying drawings in which:
Figs. 1-2 depict prior art systems for managing fault-tolerant network connections:
Fig. 3 depicts a fault-tolerant network connection topology in accordance with one embodiment of the present invention:
Fig. 4 is a functional block diagram of the link manager of Fig. 3 in accordance with one embodiment of the present invention;
Figs. 5-7 are flow-diagrams of techniques in accordance with one embodiment of the present invention: and
Figs. 8-11 depict several topologies in conformance with the techniques of the present invention.

### Detailed Description of a Preferred Embodiment

In accordance wit the present invention, depicted herein are techniques for establishing a fault-tolerant connection to a network that overcome the disadvantages of prior techniques discussed hereinabove. That is. according to the present invention, connectivity problems are quickly detected, and upon assumption of an alternate (back-up) connection, network reroute times are mitigated.

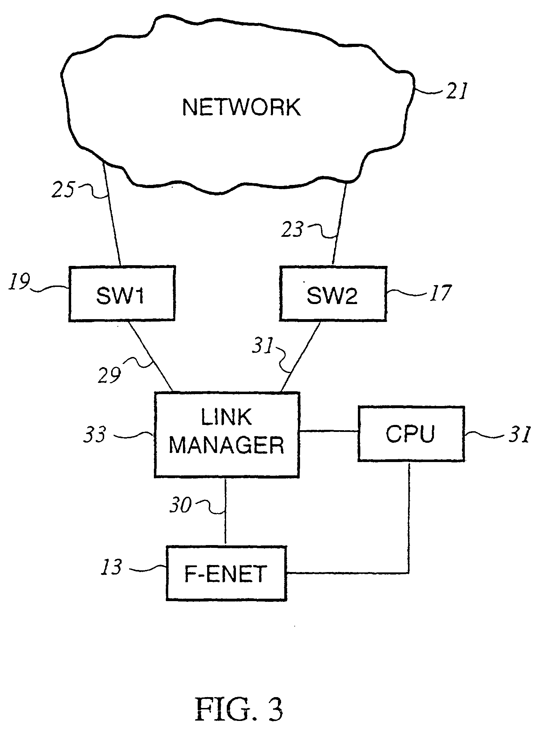

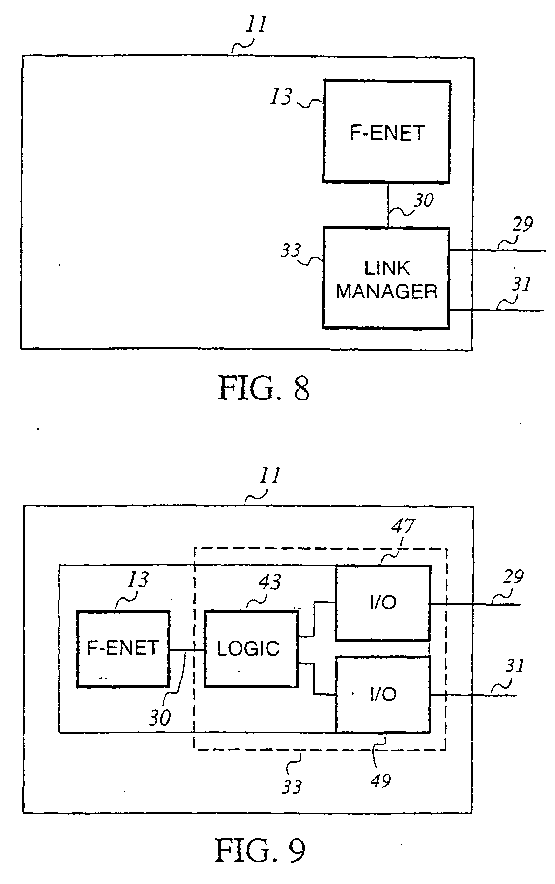

Turning to Fig. 3, a fast-Ethernet interface 13 is connected to both a link manger 33 and a CPU 31. The topological relationship between fast-Ethernet interlace 13, link manager 33 and CPU 31 will vary with implementation requirements. Several example topologies are discussed hereinabove in regard to Figs. 9-12; however, many other topologies will become apparent to those of ordinary skill in the art in view of the disclosure herein.

The techniques disclosed herein are not limited to fast-Ethernet technology. Other networking technologies may be subjected to the techniques disclosed herein, such as, for example, conventional Ethernet technology.

Link manager 33 is connected to both fast-Ethernet interface 13 and CPU 31. The connection to fast-Ethernet interface 13 is that which would be normally used for network connectivity. The connection of link manager 33 to CPU 31 is for configuration and control purposes. In one implementation example, link manager 33 and fast-Ethernet interface 13 may each be PCI cards within a personal computer architecture. In this example. their connections to CUP 31 are by way of the PCI bus. A cable may connect fast-Ethernet interface 13 and link manager 33.

Two network connections 29 and 31 (for example, fast-Ethernet connections) couple link manager 33 to switches 19 and 17, respectively. Connections 23 and 25 couple switches 17 and 19 to network 21, which connects them to each other.

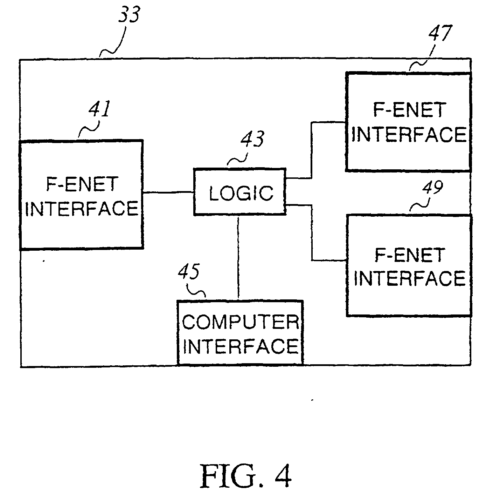

Link manager 33 is more specifically depicted in Fig. 4. A fast-Ethernet interface 41 provides connectively (e.g., PCI bus interface) with an attached host computer. Computer interface 45 also attaches to the host computer and facilitates configuration and control of link manager 33. Fast-Ethernet interfaces 47 and 49 provide redundant network connectivity. Lastly, logic 43 interconnects the above-described elements. In a preferred embodiment, logic 43 is implemented as an ASIC; however, the particular implementation of logic 43 will vary with product requirements. In other implementation examples, logic 43 could be implemented using a programmed processor, a field programmable gate array, or any other form of logic that may be configured to perform the tasks disclosed therefor herein.

To briefly summarize, the techniques of the present invention send test messages across each connection of the link manger to the attached switches. A break in a connection, or faulty connection, is detected upon a failed response to one of the test messages. In response to this failure, traffic is routed across the remaining good connection. To facilitate fast protocol rerouting, a test message is sent across the now active connection bound for the switch connected to the inactive connection. This message traverses both switches causing each to learn the new routing. Rerouting is therefore accomplished quickly.

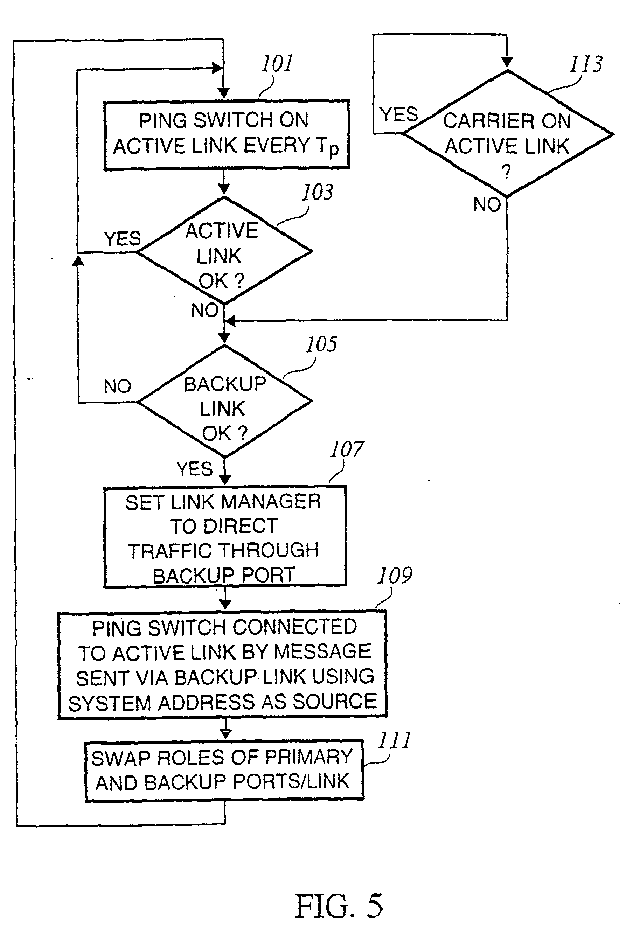

More particularly. according to one-embodiment, Figs. 5-6 depict flow-diagrams of operational techniques in accordance with one embodiment the present invention. To begin, the link manger pings a switch connected to the primary, active connection, every Tₚ seconds, STEP 101. The ping message contains a source address unique to the link manager port currently associated with the active connection. If the active connection is ok, pinging thereof continues, STEP 101. Also, a check is regularly performed to detect a loss of receive signal on the active connection interface, STEP 113.

If either pinging fails on the active connection, or carrier has been lost. a test is performed to check whether the back-up connection status good, STEP 105. If the back-up connection is unavailable, no further action can be taken and pinging of the primary connection continues in anticipation of either restoration of the active connection or availability of the back-up connection. Also under this condition, the host computer may be notified such that it may take appropriate action, such as, e.g., to enter a fail-safe condition.

If the back-up connection status is good, the link manger is configured to direct traffic through the back-up connection, STEP 107. Further, a ping message is sent from the link manger, through the switch connected to the back-up connection and to the switch connected to the primary, failed, connection, STEP 109. This ping message contains a source address of the computer connected to the link manager. As a result, the switches connected to the primary and back-up connections are made aware of the new routing to the computer. This facilitates the immediate routing of traffic bound for the computer over the back-up, secondary, connection. Lastly, the roles of active and backup connections are swapped and the process iterates, STEP 111.

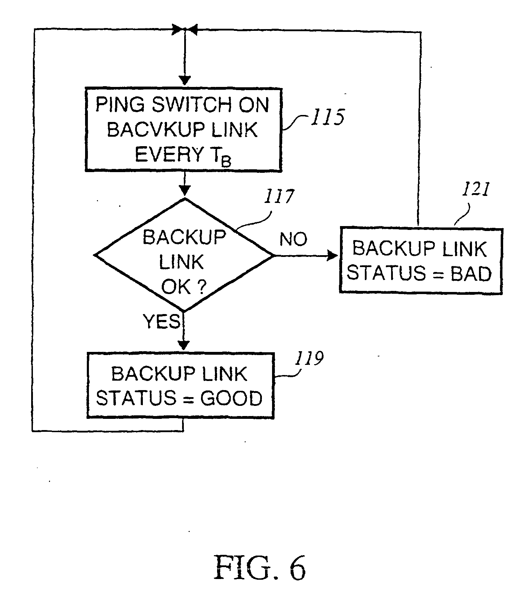

Turning to Fig. 6, a flow-diagram depicts a technique for maintaining the status of the back-up connection. A ping is send over the back-up connection to its respective switch every Tₚ seconds, STEP 115. The ping message contains a source address unique to the link manager port currently associated with the backup connection. If the back-up connection is good, that is, the ping is responded to timely, STEP 117; then the back-up connection status is set to good, STEP 119. If the response to the ping message is not timely received, the back-up connection status is set to bad, STEP 121. (A maintenance alert may also be generated. The invention facilitates detecting latent faults in unused paths and repairing them within the MTBF of a primary fault.) In either case, the processor iterates to the pinging step, STEP 115.

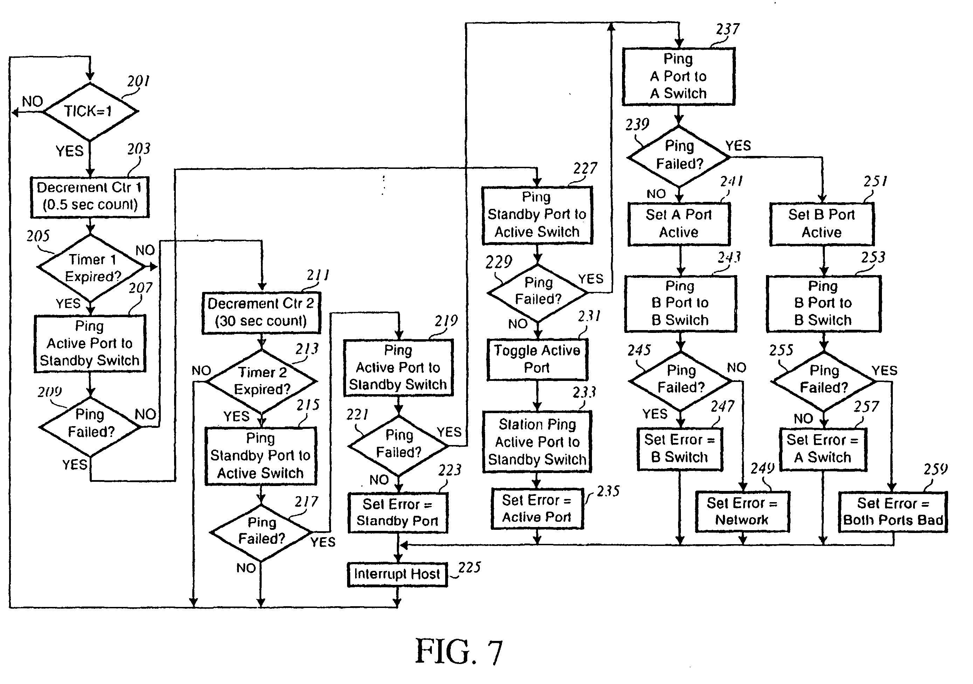

According to the above-described embodiments ping messages are sent from the link manager, across each connection to the switch attached thereto. Failure of these ping messages will indicate failure of the link the ping message was sent across. In accordance with the embodiment of Fig. 7 described below, ping messages are sent across each link, but are bound for the switch connected to the other connection. Thus, the ping message must traverse one switch to get to the destination switch, traversing both the connection from the link manager to the immediately attached switch and across the connection between the switches. Thus. the technique described below can localize faults in the connections between the link manager and each switch and the connection between the switches. Further, this embodiment contains example information on how time message transmission can be implemented using a common clock.

As described above. the pings sent from each port have unique source address for that particular port. However, to facilitate fast rerouting, the final ping. once the port roles are swapped uses the source address of the attached computer system.

To begin, a clock tick is awaited, STEP 201. Clock ticks are used as the basis for timing operations described herein. If a clock tick has not occurred. no action is taken. However, if a clock tick has occurred a first counter is decremented, STEP 203. This first counter is designed to expire, on a 0.5 second basis (of course, this time can be adjusted for particular application requirements).

If the first counter expired, indicating that the 0.5 second period has elapsed, a ping message is sent from the active port to the standby switch using the address of the active port. STEPS 205, 207. If the ping is successful, STEP 209. a second counter with a 30 second interval is decremented, STEP 211. The second counter decrement is also performed if the first counter decrement did not result in the 0.5 second time period expiring, STEP 205. If the second counter has not expired, STEP 213, then the process iterates awaiting a next clock tick, STEP 201. If the second counter has expired, a ping is sent from the standby port to the active switch using the standby port's address, STEP 215. If the ping was successful, STEP 217 then the process iterates awaiting another clock tick, STEP 201.

If the ping from the active port to the standby switch failed, STEP 209, a ping is sent from the standby port to the active switch. STEP 227. If this ping is successful, STEP 229, then the roles of the active and standby ports and switches are reversed, STEP 231, and a ping is sent from the now active port to the now standby switch using the address of the computer station, STEP 233. This ping facilitates the switches learning the new path to the computer thus correcting routing information. Furthermore, the old active port is determined to be in error, STEP 235.

Turning back to STEP 215, if the ping from the standby port to the active switch failed (STEP 217) a ping is sent from the active port to the standby switch, STEP 219. If this ping fails. there is an error associated with the standby port, STEP 223.

Turning back to STEP 227, a ping was sent from the standby port to the active switch. If this ping failed. then the current error must be associated with either the switches, the network between the switches or both ports may be bad. Therefore, for the following steps, it is most helpful to refer to the ports and switches as the "A port", "A switch", "B port" and "B switch", wherein the A port is directly connected to the A switch and B port is directly connected to the B switch. The notion of which port is currently active and which port is currently backup is not significant to the following steps.

Again, if the ping from the standby port to the active switch, STEPS 227, 229, failed then a ping is sent from the A port to the A switch. STEP 237. If this ping is successful, STEP 239, then the A port is set as the active port, STEP 241. A ping is then sent from the B port to the B switch, STEP 243. If this ping failed STEP 245, then the error is associated with B switch, STEP 247; however, if the ping was successful, then the error is associated with the network, STEP 249.

If the ping from the A port to the A switch, STEP 237, failed, STEP 239, then the B port is set as active, STEP 251. A ping is then sent from the B port to the B switch, STEP 253. If this ping failed, then an error is associated with both ports, STEP 259; however. if the ping was successful. STEP 255, then the error is associated with A switch, STEP 257.

In each of the above steps, once the error is determined and set (STEPS 223,235, 247.249, 257, and 259), an interrupt is sent to the host processor (STEP 255) for providing notification of the change in network configuration.

The techniques of the present invention may be implemented in different topologies. As examples. several of these topologies are depicted in Figs. 8-11.

In each of the examples, the computer depicted may be. for example, a workstation, an embedded processor. a controller, (e.g., industrial or environmental) or other computer type.

Beginning with Fig. 8, a computer 11 is depicted and contains fast-Ethernet interface 13 and link manager 33 connected by cable 30. Connections 29 and 31 couple the system to a network. The particular implementation and use of computer 11 will vary. In one example, computer 11 is a PCI bus-based computer and fast Ethernet interface 13 and link manager 33 are PCI interface cards. In another embodiment. all circuitry may be on a common board (e.g., the system motherboard).

In Fig. 9, the functions of link manager 33 and fast-Ethernet interface 13 have been integrated onto a single interface card. As one example, this card may interface with its host computer using a PCI bus.

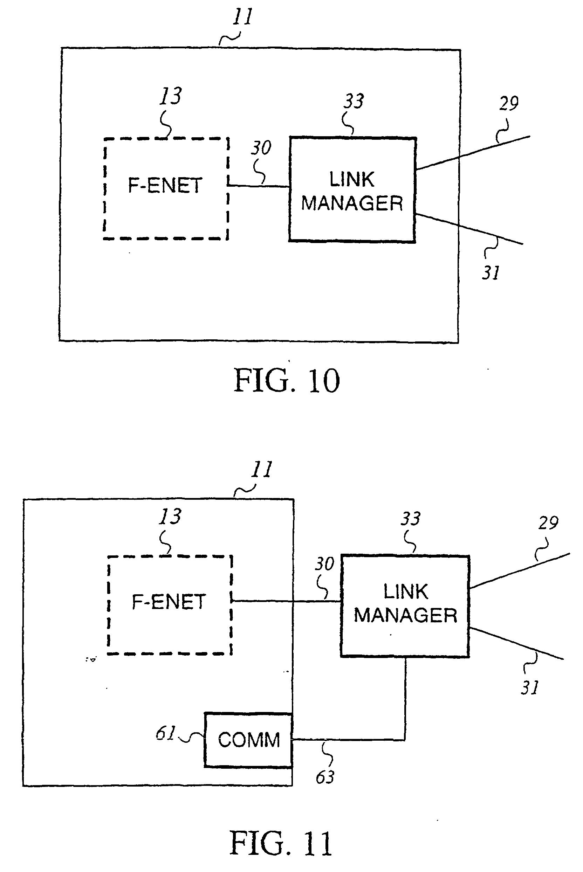

In Fig. 10, fast-Ethernet interface 13 is incorporated on a main board (e.g., a motherboard) of computer 11. Link manager 33 is a peripheral (e.g., PCI) interface card.

In Fig. 11, fast-Ethernet interface 13 may be incorporated on a main board of computer 11 or as a separate interface card. Link manager 33 is disposed external to computer 11 and is connected thereto by connections 30 and 63. Connection 63 is particularly used for command and control of link manager 33 and interfaces with computer 11 through a communications port 61 (e.g., a serial or parallel port).

A variety of techniques are available for implementing the techniques described herein. The present invention is not meant to be limitive of such implementation, as many options are available to those of ordinary skill in the art and will be apparent in view of the disclosure herein. Implementations may take form of software, hardware, and combinations of both. Dedicated logic, programmable logic, and programmable processors may be used in the implementation of techniques disclosed herein. One particular implementation example using programmable logic to implement a simple instruction set capable of implementing the techniques described herein is described in detail in Appendix A, "HDS 5608-Dual Switched Ethernet Interface, Revision 1.1" attached hereto and incorporated by reference herein in its entirety.

While the invention has been described in detail herein, in accordance with certain preferred embodiments thereof, many modifications and changes thereto can be affected by those skilled in the art. Accordingly, is intended by the appended claims to cover all such modifications and changes as fall within the scope of the invention which is as defined by the claims.

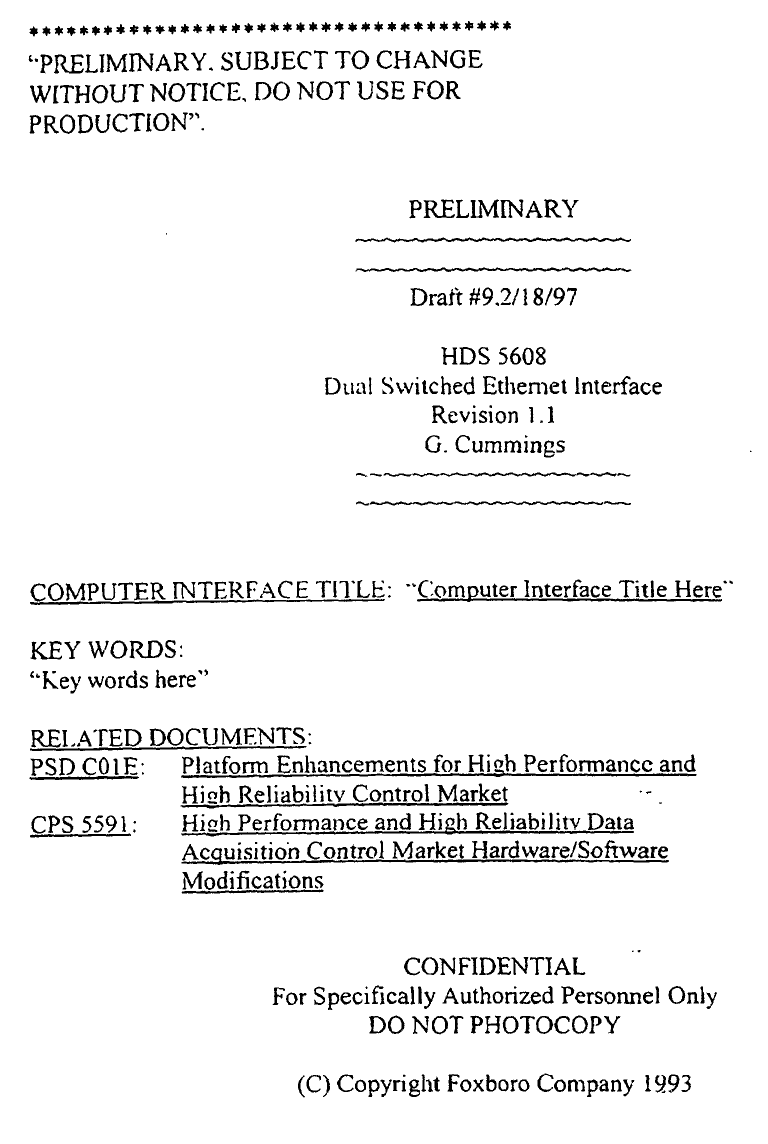

| TABLE OF CONTENTS | | | | |
|---|---|---|---|---|
| 1. | Design Objectives | | | -18- |
| | *1.1* | *Design Description* | | -18- |
| | *1.2* | *Design Purpose* . | | -19- |
| | *1.3* | *Design Objectives* | | -19- |
| | *1.4* | *Interrelationship to System* | | -19- |
| | | | | |
| 2. | Reference Documents | | | -20- |
| | | | | |
| 3. | Functional Specifications | | | -20- |
| | *3.1* | *Internal Hardware-Oriented Functions* | | -20- |
| | *3.2* | *Firmware Description* | | -21- |
| | *3.3* | *Diagnostics* | | -21- |
| | | | | |
| 4. | Principle of Operation | | | -21- |
| | *4.1* | *Architecture* | | -21- |
| | | 4.1.1 | The Link Manager | -22- |
| | | 4.1.2 | The Satellite Receiver Time Strobe | -29- |
| | | 4.1.3 | The Foxboro Letterbugs | -30- |
| | *4.2* | *Bus Descriptions* | | -31- |
| | | 4.2.1 | Electrical Characteristics | -32- |
| | | 4.2.2 | Data Movement | -32- |
| | | 4.2.3 | Constraints | -32- |
| | | 4.2.4 | Programming Information | -32- |
| | *4.3* | *Interfaces* | | -33- |
| | *4.4* | *Technology Applications and Constraints* | | -33- |
| | *4.5* | *Functional Block Description* | | -33- |
| | *4.6* | *Testability*/*Fault Isolation Features* | | -33- |
| | | | | |
| 5. | Hardware Oriented Performance | | | -33- |
| | *5.1* | *Performance Requirements* | | -33- |
| | *5.2* | *Performance Goals* | | -34- |
| | *5.3* | *Constraints* | | -34- |
| | *5.4* | *Cycle Time*/*Bit Rates*/*Speed* | | -34- |
| | *5.5* | *Power Requirements* | | -34- |
| | *5.6* | *FMEA Results* | | -34- |
| | | | | |
| 6. | Special Design Considerations | | | -34- |
| | *6.1* | *Power*/*Grounding Constraints* | | -34- |
| | *6.2* | *Packaging* | | -35- |
| | *6.3* | *Physical Constraints*/*Implications* | | -35- |
| | *6.4* | *Environmental Constraints*/*Limitations* | | -35- |
| | *6.5* | *Product Safety*/*Certification Considerations* | | -35- |
| | *6.6* | *Test Considerations* | | -35- |

### REVISION HISTORY FOR HDS 5608

| | | | |
|---|---|---|---|
| REVISION | 1.0 | DECEMBER 1997 | |
| | | | |
| REVISION | 1.1 | FEBRUARY 1998 | DEBUG FEATURES ADDED INCLUDING REGISTER REORGANIZATION FOR DUMPING TO MEMORY. |

### 1. Design Objectives

The Dual Switched Ethernet Interface (DSEI) circuit board is intended to provide an interface between any PC or workstation having standard PCI bus slots and the High Perfonnance I/A network. This requires three different circuits which are unrelated except for the common PCI interface.

The major function on the board is the Link Manager, which is circuitry for achieving communications redundancy between individual I/A stations and the first pair of switches in a network of redundant Ethernet/Fast Ethemet switches. This includes the path from the stations through any hubs present and from the hubs to the switches. Above the first pair of switches the fault tolerance of the network is a function of the system purchased.

Another new function is the interface to the Satellite Receiver Time Strobe. This is an optional feature which allows stations in the I/A High Performance Network to synchronize their real time clocks.

The board also contains the standard I/A Letterbug Interface, necessary to establish the identity of each station on the network.

### 1.1 Design Description

The cable redundancy function of the DSEI accepts one Ethernet/Fast Ethernet MII (Media Independent Interface) from the host station and switches it between two Ethernet/Fast Ethernet PHY chips on the DSEI. These drive two cables to separate switches in the network which should have no common mode of failure between them. The DSEI contains a programmable Link Manager which selects one of the two PHY driver chips and its link to the network as active and the other as standby. It monitors the operability of each by sensing its link integrity signal and by periodically sending heartbeat messages to the first level switches of the network to which it is connected and monitoring the reply. If it finds either link to be inoperable it reports the failure for maintenance, and if the failure is on the active link it can be programmed to automatically switch to the standby.

For time synchronization the station first receives a message giving the time at which the strobe will occur. The Time Strobe is a simple pulse which interrupts the processor so it can set its real time clock to the time given in the preceding message. The station may be set up as a master, which receives the message and strobe from the satellite receiver and distributes them to other stations, or as a slave which simply receives the strobe and interrupts the processor. The strobe also resets a counter which counts milliseconds from the strobe for a software readable high resolution elapsed time reference.

The Letterbug interface is the same as is used on present I/A modules. It consists of the input and output ports necessary to read the unique hard-wired links within each of the six letterbugs plugged into the board. This allows software to identify the module identifier characters they represent.

### 1.2 Design Purpose

The chief purpose of the design is to maintain the same level of station level cable redundancy and fault recovery as the present I/A network while upgrading network performance with commercially available Fast Ethernet Switches which do not inherently support such fast switching redundant station connections. It also provides hardware support for the Time Strobe and letterbug functions, which are unique to I/A, to the commercial PC or workstation in which it is used.

### 1.3 Design Objectives

The objective of the DSEI board is to integrate the station in which it is used into the I/A High Performance Network and maintain a communications failure recovery time of no more than one second between peer group stations.

### 1.4 Interrelationship to System

The same Link Manager circuit will be used in each station having redundant network interfaces. In each case it will connect to the MII standard interface of the host's Fast Ethernet controller and its output will consist of two RJ-45 connectors for the A and B ports which connect to the network. A red Category 5 UTP cable will be used to connect the A port to the A switch of a redundant pair, and a similar green cable will be used to connect the B port to the B switch of the pair. Initialization and control of the Link Manager is accomplished by the host over a standard PCI interface.

For use with commercial processors the DSEI circuit will be packaged on a standard PCI board occupying one slot. It will connect to a Fast Ethernet controller either on the motherboard or on a separate PCI card using a standard MII cable and connector. To further integrate these commercial processors into the I/A system, this board will also contain a standard I/A letterbug and interface and an interface for receiving and optionally retransmitting an I/A time sync strobe.

For use with Foxboro processors the circuit will be packaged on the main processor board where it will connect directly to the PCI bus and the MII of the Fast Ethernet controller. For Z Modules the two network connections will be made through the module I/O connector. The letterbug and time sync strobe will be located elsewhere on the processor motherboard.

Where optical fiber connections to the network are required they will be supplied by external wire-to-fiber converters in the case of commercial processors or by a fiber uplink from the associated hub in the case of Foxboro modules. In either case the device must supply the link integrity signal.

The same circuitry is intended to be used in all future products requiring redundant . connections to the switched Ethernet/Fast Ethernet network with some variations in packing similar to those described above.

The Time Strobe will generally be received from the satellite receiver by a master station which will distribute it to all other stations in the installation requiring it via a daisy chained shielded twisted-pair cable and RS-485 transceivers. See HDS 5624 for details.

### 2. Reference Documents

PSD C01E: Platform Enhancements for High Performance and High Reliability Data Acquisition and Control Market.
CPS 5591: High Performance and High Reliability Data Acquisition and Control Market Hardware/Software Modifications.
HDS 5563: Fast Ethernet Control Processor Modules.
HDS 5624: Hardware for Computer Time Synchronization.
HDS 1017: Module identifiers. (Letterbugs)
PCI Local Bus Specification Rev 2.1, PCI Special Interest Group, June 1995.
New Products Catalog, PLX Technology, July 1997.
Data Sheet LXT970, Fast Ethernet Transceiver, Level One Communications, Inc. Rev 1.1. May 1997.

### 3. Functional Specifications

### 3.1 Internal Hardware-Oriented Functions

The Link Manager hardware consists of a programmable logic chip and a 32K X 8 bit Link Manager memory used as a program and message buffer. The programmable chip is controlled by commands from the host and any faults detected are signaled by interrupt and presented to it in a status register.

When commanded to perform message operations it uses program code and data from the Link Manager memory which is mapped into PCI memory space and must be downloaded prior to such operations. This contains a set of "canned" messages to be transmitted, and a control program for using them to determine the health of the network interface and to maintain communications within the peer group.

When running, the Link Manager chip controls access to its own registers and to the Link Manager memory in order to prevent interference from the processor with its operations.

It must be halted by issuing an I/O command, with execution verified in the Status Register, before the Link Manager memory can be accessed.

The physical ports on the board are called Port A and Port B. These physical ports are assigned a logical role, active or standby, by the Link Manager.

### 3.2 Firmware Description

EEProms will be used to automatically configure the internal registers of the PCI 9050-1 and the Altera EPF6016 at power up. The Link Manager algorithm and data will be downloaded to the Link Manager memory by the host processor. See the Architecture section for a description of the Link Manager algorithm.

### 3.3 Diagnostics

Since the DSEI is to be used with commercial PC's and workstations there will be no start up diagnostics. Manufacturing diagnostics will still be required to check out the first boards before a GenRad fixture becomes available.

### 4. Principle of Operation

### 4.1 Architecture

The DSEI card for use with commercial workstations and file servers includes three unrelated functions. The major one is the Link Manager for maintaining dual fault tolerant connections to the network. The card also contains the Foxboro letterbug module identifiers and the Time Strobe Interface for transmitting and receiving accurate time signals throughout the network.

### 4.1.1 The Link Manager

The Link Manager is a special purpose processor which serves as an agent of the communications software since the latter does not have the low level link and physical level control to execute the required functions continuously in real time. The program and data required are downloaded to the Link Manager at system configuration time and it acts autonomously to maintain an operational link to the network thereafter.

### 4.1.1.1 Memory and register addressing

Registers and commands use Local Address Space 0 of the PLX chip, which should be configured as 16 I/O locations based at PCI Base Address 0. Programs and stored messages are contained in a 32Kx8 memory chip which is addressed as Local Address Space 1 of the PLX chip and configured as a 32K memory space based at PCI Base Address 1.

In addition to the host addressing above there are also 4-bit Local Register Addresses (LREG 3..0) used by the Link Manager program. Some registers are only accessible from the host. some only by the Link Manager, and some by both.

### 4.1.1.2 Registers

Local address space 0 (I/O)
Address Offset = 0H
Write Only, data is don't care

### Halt Command

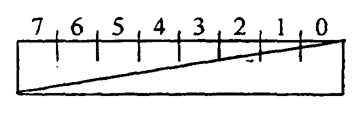

Halts instruction execution and places link manager into halt mode. necessary to download to the Link Manager memory or registers. Halted condition must be verified by reading Status Register before downloading.
Local address space 0 (I/O)
Address Offset = 1H
Read/Write if Halted

### Control Register

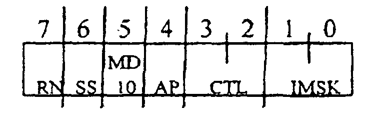

- RN: Run state. Setting starts continuous program execution at address in IP.
- SS: When set with run, initiates single step execution of one instruction at IP address. At completion, loads contents of internal registers to high end of memory to aid debugging, clears run and halts.
- MD10: Changes communication clocks to 10MHz for standard Ethernet. Used in association with software initiated auto-negotiation.
- AP: Assigned port for operational communications. 0 = A port, 1 = B port.
- CTL: Additional control bits if required for future use.
- IMSK: Interrupt mask bits. 0 enables related interrupt, 1 disables related interrupt. IMSK0 = Link Manager, IMSK1 = Time Strobe.

Host Local Address Space 0 (I/O)
Address = 2H, Read Only
LREG = 2H

### Status Register

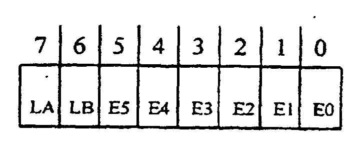

- LA =: 1 Failure of Link Integrity signal on A port.
- LB =: 1 Failure of Link Integrity signal on B port.
- E5 - E0: Error code used to define network fault to host.
Local Address Space 0 (I/O)
Address = 3H, Read Only
LREG = 3H

### Interrupt Register

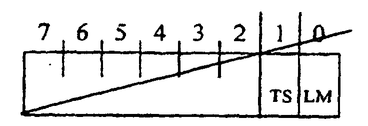

Both bits are set to interrupt host and are cleared by host when read.
- LM = 1: Link Manager Interrupt.
- TS = 1: Time Strobe Interrupt

Local Address Space 0 (I/O)
Address = 5H, Read/Write if Halted
LREG=Not Accessible

### Instruction Pointer Low Byte

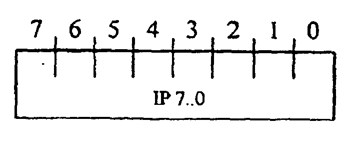

Local Address Space 0 (I/O)
Address = 6H, Read/Write if Halted
LREG = Not Accessible

### Instruction Pointer High Byte

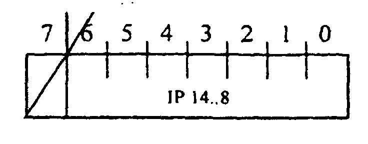

Not accessible from host
LREG = OH
Read/Write

### Real Time Clock Register

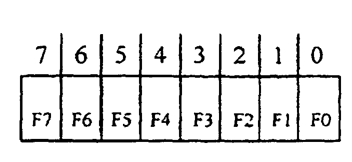

This register contains the value used to automatically reload the counter which counts a 41.9 43 ms pulse (the period of 25 MHz/2^20) from the hardware to provide the real time clock tick. It pulses TICK for 1 us upon reaching zero to initiate each pass of the scheduler and to decrement timeout counters. For example, a register value of 05H produces a TICK period of approximately 200 ms. The value should be set by a compromise between the shortest counted period, the ping timeouts, and the longest counted period, the standby channel ping rate.
Not accessible from host
LREG = 1H
Read/Write

### Flag Register

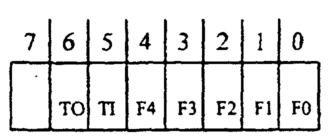

- Z: Zero flag set by operations producing a zero result in the accumulator.
- TO: Set by a timeout result of the ping instruction.
- TI: Set by countdown to zero of the real time clock register (tick). Must be reset by programmed logic instruction.
- F4 - F0: Programmable flags which can be used for program flow logic.

### 4.1.1.3 Interrupts

The PLX 9050-1 chip maps all interrupts from the DSEI board to the PCI bus interrupt for the slot in which it is located. It defines two maskable hardware interrupts plus a software interrupt and the Interrupt Control/Status Register contains enable, status and polarity control bits for each, plus a master enable. Owing to an error in the initial chip which makes these difficult to differentiate in operation however, only the default hardware interrupt is used, Local Interrupt 1. It should be configured for active high operation and enabled at power up.

The Control and Interrupt Registers contain separate mask and interrupt bits for the Link Manager and the Time Strobe. These drive Local Interrupt 1 of the PLX chip. Interrupt mask bits inhibit interrupts when set to one. Interrupt Register bits define the cause of interrupt when set and are cleared when read. The causes of Link Manager interrupt are defined by the error code in the Status Register. The only cause of the Time Strobe interrupt is receipt of the strobe.

### 4.1.1.4 Instruction Set

The instruction set is designed to support sending stored ping messages to the network switches and testing for the reply as well as implementing real time counters for scheduling them. It also includes logical and branching operations for forming sequences of them to localize faults and make intelligent routing decisions. 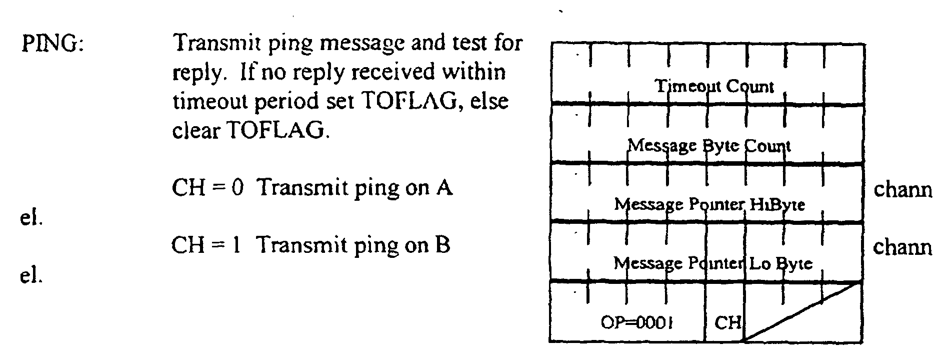 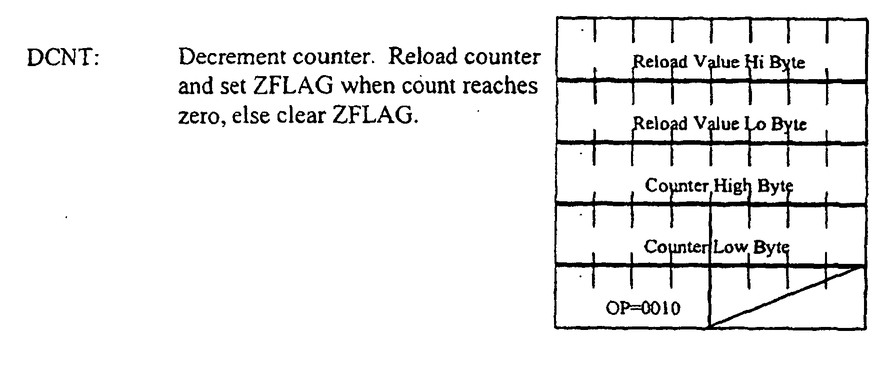 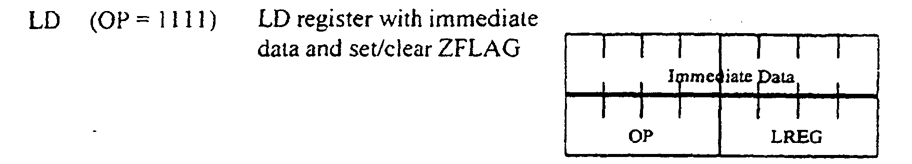
- AND (OP = 1100): AND register with immediate data. load to register and set/clear ZFLAG.
- OR (OP = 1101): OR register with immediate data, load to register and set/clear ZFLAG.
- XOR (OP = 1110): XOR register with immediate data. load to register and set/clear ZFLAG.
- AND (OP = 0100): AND register with immediate data and set/clear ZFLAG only.
- OR (OP = 0101): OR register with immediate data and set/clear ZFLAG only.
- XOR (OP = 0110): XOR register with immediate data and set/clear ZFLAG only.

LREG is local Link Manager register address.

Set ZFLAG if result equals zero, else clear ZFLAG.

Example: 1110 0001, 0001 0000 uses an XOR operation to complement bit 4 of the Control Register, which is the means of toggling the active port assignment.
- JMP:: Go to jump address if condition true. 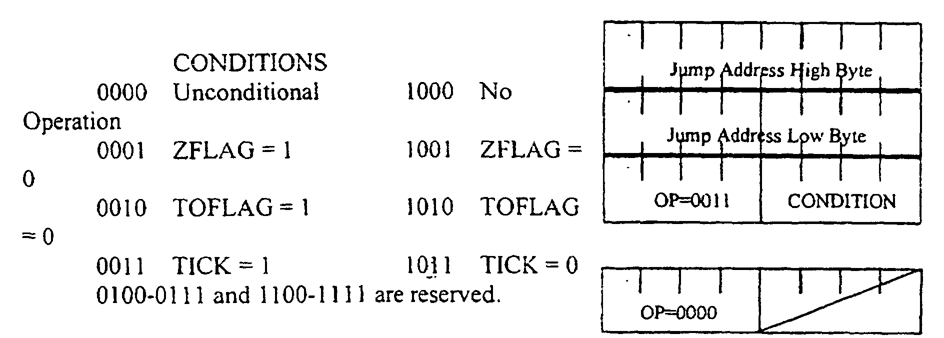
- HALT:: Halt instruction execution.

### 4.1.1.5 Link Manager Operation

The Link manager is intended to operate with the following network configuration.

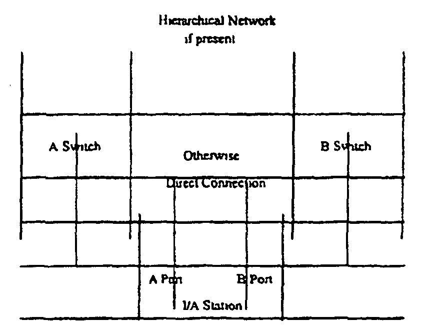

Each station is connected to two different switches within the network for redundancy. These are interconnected with each other directly, if they are the highest level of the network. or through the higher level network if they are not. The stations on such a pair of switches constitute a process control peer group which must maintain contact with each other through any single fault condition with no more than one second of communications loss. Longer recovery times are allowed at higher levels of the network.

The Link Manager in each station normally tests its connection to both switches since link failures may force it or other stations onto either switch. Should one of the switches themselves fail however, all stations must detect this and independently switch to the survivor. Should the interconnection between the two switches fail, whether it is direct or via the network, all stations must recognize this and choose to connect to the same switch by prior agreement.

Each station has three different MAC addresses assigned, one to the station itself for operational traffic and one to each port, used by the Link Manager for sending and receiving test messages.

A simplified flow chart of the main link management algorithm follows. It starts with a scheduler loop which runs with each tick of the real time clock. With each pass of this loop the counters for each scheduled operation are decremented and when they reach zero the link tests are executed. The active channel is tested every half second. The standby channel is also tested every 30 seconds in order to catch any latent faults.

The normal link tests consist of ping messages from each port sent to the opposite switch than the one to which they are connected. This tests the station link, both switches and the path between them. Should only one of these tests fail and not the other, it implies loss of that station link since the other sources of failure are common to both tests. If it is the standby channel which failed it is simply reported to the host for maintenance.

Should the active channel test fail however, the roles of active and standby port are switched. A ping message using the station address is then sent to the old active switch via the new active port and switch. This causes each switch along the path to associate the station address with the port on which this message was received, which effectively reroutes all operation traffic from the old active switch to the new active switch and port onto which the station has been relocated.

Should both tests fail, it implies that one or the other switch is bad, or the connection between them is bad. In this case each switch is tested by pinging it from the port directly connected to it. If either switch is bad, the station switches over to the good one. If both switches test good, then the connection between them is bad and all stations arbitrarily switch to the A port. If both switches should test bad, then both switches or the links to them are bad. This is a multiple fault from which no recovery by the Link Manager is possible. but the situation is reported to the host for whatever local fail safe action it can take.

### 4.1.1.6 Debugging Features

A single-step feature with a dump of the internal registers to the memory has been included to aid in the debugging of the Link Manager code. Following any single-step operation the contents of the following registers will be moved into the Link Manager memory locations indicated.

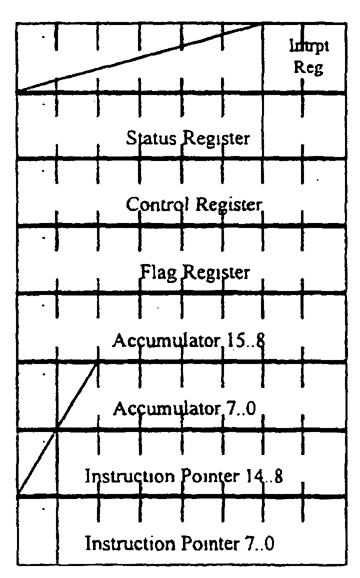

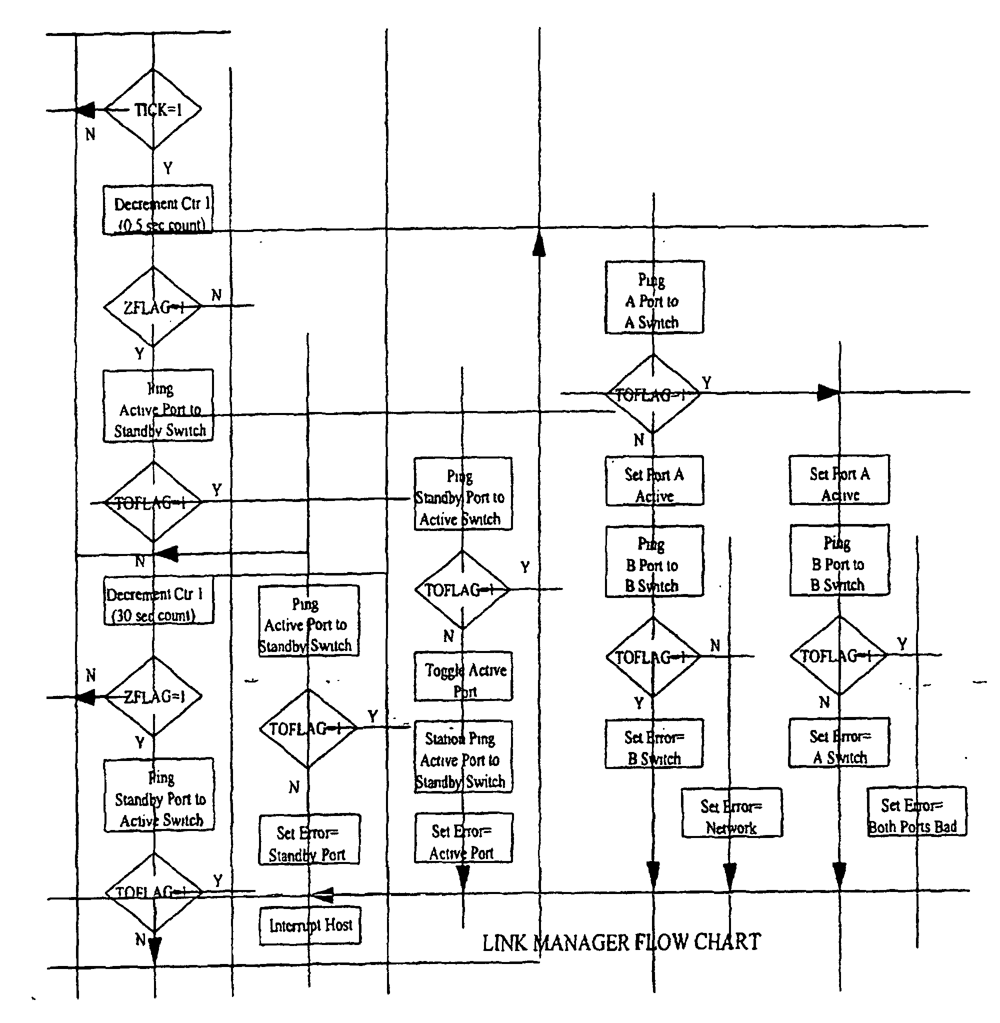

### 4.1.2 The Satellite Receiver Time Strobe

The satellite receiver sends a time of day message followed by a separate Time Strobe. a single pulse marking that time by its leading edge. The message is received over separate communications. The strobe is received on the DSEI board of each station and is used to interrupt the processor.

Only one I/A station will receive these messages and pulses directly from the satellite received via an RS-232 link and strobe interrupt. It will act as the master station to distribute both of them as often as is required to the rest of the installation via the I/A network and the strobe interrupt of each station. A master station will set up its Time Strobe Control Register. All other stations must set this register to all zeroes.

### Time Strobe Control Register

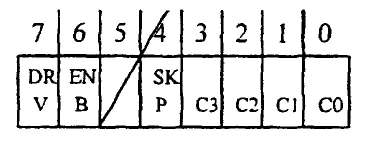

Local Address Space 0
Address Offset = 8H
Read/Write

- DRV = 1:: Drive time strobe bus directly as an output of this bit.
- ENB = 1:: Enable each pulse from the satellite receiver to drive the time strobe bus
- SKP = 1:: Enable one pulse from the satellite receiver to drive the time strobe bus after skipping the number of pulses specified in C3-C0.

For high resolution timing a readable/writeable counter is included on the board which is reset by the Time Strobe and counts out each second in millisecond increments.

### High Resolution Timer High Byte

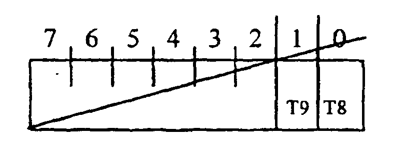

Local Address Space 0
Address Offset = 9H
Read Only

### High. Resolution Timer Low Byte

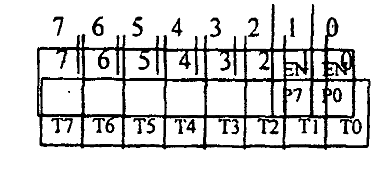

Local Address Space 0
Address Offset = AH
Read Only

### 4.1.3 The Foxboro Letterbugs

The Foxboro letterbugs are unique hard-wired plugs for each of the alphanumeric characters, six of which are typically inserted into each I/A station module as module identifiers. Six of these are included on the PCI version of the DSEI to identify the station in which it is used to the rest of the network.

The Foxboro letterbug interface electrically reads the six coded letterbugs. It consists of two addressable letterbug select ports enabled by two separate control bits from a third port and a read-only input port where the letterbug code may be read.

### Letterbug Select Port Low Byte

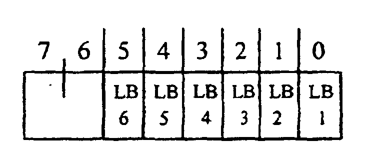

Address Offset = BH
Local Address Space 0
Read/Write

### Letterbug Select Port High Byte

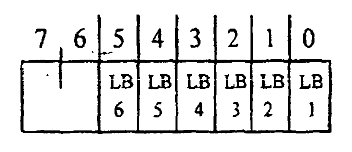

Local Address Space 0
Address Offset = CH
Read/Write

### Letterbug Pin Enbable

Local Address Space 0
Address Offset = DH
Read/Write

### Letterbug Code Input Port

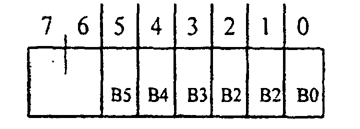

Local Address Space 0
Address Offset = EH
Read/Write

Pin 0 is driven high on a particular letterbug if it s bit in the Letterbug Select Port low byte is set and ENP0 is set to enable the pin 0 drivers. Through unique links to P0 for each character a diode array to the Letterbug Code Input Port is driven where the resulting letterbug code can be read.

Pin 7 on a particular letterbug is driven high if its bit in the Letterbug Select Port high byte is set and ENP7 is set to enable the pin 7 drivers. Through unique links to P7 for each character a diode array to the Letterbug Code Input Port is driven where the resulting letterbug code can be read.

ENP0 and ENP7 should be kept normally reset and should not both be set at the same time. Each letterbug should be selected in turn, EMP0 set, the letter bug code read, ENP0 cleared and ENP7 set, the letterbug code read again, and ENP7 cleared.

For details of the letterbug decoding scheme see Foxboro HDS 1017, "MODULE IDENTIFIERS".

### 4.2 Bus Descriptions

The PCI bus is converted by a PLX Technologies PCI 9050-1 chip to an 8-bit local bus with address, data and strobe signals. The programmable logic chip and the Link Manager memory chip actually reside on this local bus. The chip also provides interrupts, programmable chip selects and the PCI configuration registers for the plug-and-play interface. All registers and buffers on the DSEI are addressed by the local address space of a programmable chip select and an offset address which maps to a PCI base address with the same offset.

### 4.2.1 Electrical Characteristics

All bus signals comply with the relevant standards. Local bus and internal logic signals will be 5V CMOS logic levels.

### 4.2.2 Data Movement

During initialization data will be downloaded over the 32-bit PCI bus to the 8-bit Link Manager memory and 8-bit I/O registers in the logie chip via the local bus. Byte ordering is Little Endian. During run mode messages will be read from the Link Manger memory over the 8-bit local bus and transferred via the 4-bit Mill interface to the PHY interface chips. They in turn will re-encode the 4-bit values using Manchester encoding for Ethernet or 4/5 encoding for Fast Ethernet and will serialize this for transmission to the network.

### 4.2.3 Constraints

The network interface of the DSEI is constrained to operate half duplex since the Link Manager must be able to use the CSMA/CD media access control to gain the use of the link for sending its ping messages. This.mechanism does not function in the full duplex mode of controllers since no contention for the link is possible.

Additionally, in the case of fault tolerant stations a half-duplex hub is required as the immediate station interface in order for the shadow module to receive what the primary is sending and for both to receive the same traffic from the rest of the network.

### 4.2.4 Programming Information

Since the DSEI board is to be used with a variety of commercial PCs and workstations it must implement the plug-and-play features of the PCI interface. The PLX 9050-1 PCI interface chip supports this.

The chip initialization information is contained in a serial EEPROM which can be initially downloaded and programmed from the host and will subsequently automatically initialize the internal registers of the chip. Part of this initialization includes setting up the PCI Configuration Registers to support the plug-and-play interface. Details are contained in the PLX manual listed under reference documents.

### 4.3 Interfaces

The CPU Ethernet/Fast Ethernet interface to the DSEI is the Media Independent Interface (MII) specified in IEEE Standard 802.3u (Fast Ethernet).

The interface from the DSEI to the network is the 10BaseT/100BaseTX auto-negotiated interface specified in IEEE Standards 802.3 and 802.3u.

The interface by which the CPU downloads and controls the DSEI is the PCI Local Bus Standard, Revision 2.1.

### 4.4 Technology Applications and Constraints

This interface is intended for either Ethernet or Fast Ethernet connections from the station to the network. It cannot support Gigabit Ethernet at the station level.

### 4.5 Functional Block Description

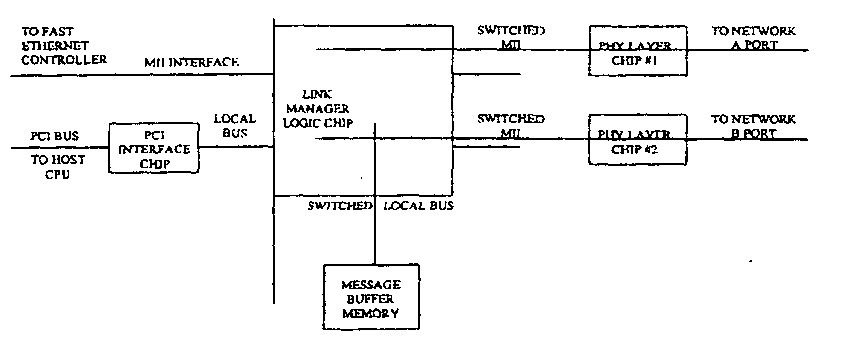

### 4.6 Testability/Fault Isolation Features

The main Link Manager algorithm performs fault isolation to the first level of switching. Since the Run command allows multiple starting locations, multiple cable maintenance and diagnostic functions can also be permanently resident in the Link Manager memory along with the normal operational code.

The Time Strobe will have an LED next to the daisy-chained cable connection which will blink with each pulse received as an aid to troubleshooting any cable problems.

### 5. Hardware Oriented Performance

### 5.1 Performance Requirements

The primary performance requirement is the ability to perform fault detection and recovery within a peer group in one second or less.

### 5.2 Performance Goals

The goal is to be able to switchover and reroute within a few hundred microseconds after the heartbeat timeout period.

### 5.3 Constraints

The Link Manager should operate using only industry standard functions of the network hardware and software insofar as possible in order to maintain flexibility in the choice of manufacturer. Proprietary functionality is to be avoided if possible.

### 5.4 Cycle Time/Bit Rates/Speed

The PCI Bus operates at 33 MHz. The PCI 9050-1 interface chip may insert wait states if it cannot keep up.

The Mill interface operates at 2.5/25 MHz depending on whether the Ethernet or Fast Ethernet mode is in effect.

The Ethernet/Fast Ethemet serial interface operates at 10/100 MHz data rates. (Fast Ethernet actually operates at 125 MHz on the wire because of the 4/5 bit encoding.)

A common 25 MHz oscillator will clock both PHY chips and the Link Manger FPGA. The Link Manager will divide the 25 MHz Fast Ethernet clock by two to operate on bytes at 12.5 MHz except for the immediate 4-bit data interface to the PHY chips. The real time clock counter is driven by the 25 MHz divided by 2^20 to approximately 23.84 Hz.

### 5.5 Power Requirements

The DSEI requires only 5V power obtained from the PCI connector of the computer in which it is used. Power consumption is yet to be determined.

### 5.6 FMEA Results

An FMEA analysis will be done on the completed design.

### 6. Special Design Considerations

### 6.1 Power/Grounding Constraints

The DSEI will be laid out on a four layer printed circuit board with signals sandwiched between the power and ground planes for minimal EMC radiation. Power and ground connections to the host are made via the standard PCI connector and its pinout.

### 6.2 Packaging

The DSEI is packaged as a standard full-length PCI card.

### 6.3 Physical Constraints/Implications

The greatest physical constraint is the space available for connectors on the metal flange of a PCI card. The letterbug and two RJ-45 connectors must be mounted there in order to be accessible from the back of the PC or workstation during operation. Therefore the permanently installed MII and Time Strobe interface cables will pass through the flange and be connected internally on the card.

### 6.4 Environmental Constraints/Limitations

See CPS 5591 for system requirements.

### 6.5 Product Safety/Certification Considerations

See CPS 5591 for system requirements.

### 6.6 Test Considerations

A full test of the DSEI can only be done after representative configuration of I/A High Performance network switching equipment can be made available for testing. Some test software will be required to generate continuous traffic which can be interrupted by a simulated failure. The data should contain a message count that would permit analyzing the amount of data lost during failure detection and recovery. The same software could also be used for detecting the amount of data loss caused by various simulated failures within the network itself.

## Claims

1. A method for managing network routing in a system including a first node (33), a second node (19), and a third node (17), wherein said first node (33) has a primary connection (29) to said second node (19) and a secondary connection (31) to said third node (17), wherein said second node (19) and said third node (17) are connected by a network (21),
the method comprising the step of:
(a) periodically communicating between said first node (33) and one of said second node (19) and said third node (17) over at least said primary connection (29) and thereby determining a status of network connectivity between said first node (33) and said one of said second node (19) and third node (17); and
**characterized by** said method including:
(b) if said network connectivity status determined in said step (a) is unacceptable, swapping roles of said primary (29) and said secondary (31) connections to establish new primary and secondary connections (31, 29) and sending a message with an origin address of said first node (33) to said second node (19) over said new primary network connection (31), wherein said origin address of said message facilitates said network nodes learning about routing to said first node (33) over said new primary connection (31).

2. The method of claim 1, wherein said first node (33) includes a first port connected to said primary connection (29) and a second port connected to said secondary connection (31), said first port having a first network address, said second port having a second network address and said first node (33) having a system network address, wherein said periodic communication is transmitted from said first port of said first node (33) with an original address of said first port.

3. The method of claim 2, wherein said origin address of said sending message of said step (b) comprises said system network address of said first node (33).

4. The method of claim 3, wherein said periodic communication between said first node (33) and one of said second node (19) and said third node (17) comprises a ping message having said first network address of said first port as an origin address of said ping message, and, optionally, either:
(a) wherein said ping message has a destination of said second node (19);
(b) wherein said ping message has a destination of said third node (17);
(c) wherein if said ping fails, a ping is sent from said second port to the other of said second node (19) and said third node (17), and, further optionally, wherein if said ping from said second port to said other of said second node (19) and said third (17) node is successful, said method includes performing said swapping roles of said primary and secondary connections (29, 31) and said pinging of said second node (19) over said new primary connection (29) of said step 1(b) of claim 1.

5. The method of claim 2, further comprising sending a ping message from said second port, with an origin address thereof, to the other of said second node (19) and said third node (17) to determine a status of network connectivity thereto.

6. The method of claim 1, wherein the first node is a computer (33), the second node is a first network switch (19), the third node is a second network switch (17), the primary connection is an active connection (29), and the secondary connection is a backup connection (31), said method including:
(a) periodically pinging said first network switch (19) by transmitting a ping message bound for said first network switch (19) over said active connection (29), said ping having an address of a port of said computer connected to said active connection (29); and
(b) if said ping fails, and said backup connection (31) is available, swapping roles of said active and backup connections (29, 31) to establish new active and backup connections (31, 29) and sending a ping with an origin address of said computer system to said first network switch (19) over said new active connection (31), wherein said origin address of said ping facilitates said network nodes learning about routing to said computer over said new active connection (31), said address of said computer system being different than said address of said port.

7. A system for managing network (21) routing including a first node (33), a second node (19), and a third node (17), wherein said first node (33) has a primary connection (29) to said second node (19) and a secondary connection (31) to said third node (17), comprising
(a) means for periodically communicating between said first node (33) and one of said second node (19) and said third node (17) over at least said primary connection (29) and determining a status of network connectivity between said first node (33) and said one of said second node (19) and third node (17) thereby;
**characterized by** said system including:
(b) means for determining if said network connectivity status determined in said step (a) is unacceptable, and if so, for swapping roles of said primary and said secondary connections (29, 31) to establish new primary and secondary connections (31, 29) and for sending a message with an origin address of said first node (33) to said second node (19) over said new primary network connection (31), wherein said origin address of said message facilitates said network nodes learning about routing to said first node (33) over said new primary connection (31).

8. The system of claim 7, wherein said first node (33) comprises a computer.

9. The system of claim 8, and either:
(a) further including a link manager (33) attached to said computer, said link manager (33) providing connectivity between said computer and said primary and secondary connections (29, 31), and, optionally either:
(i) wherein said link manager (33) is integral with said computer, and, further optionally, wherein said link manager (33) is on a main board of said computer;
(ii) wherein said link manager (33) is on an expansion board of said computer; or
(iii) wherein said link manager (33) is external to said computer;
(b) wherein said computer comprises an operator workstation; or
(c) wherein said computer comprises on of an industrial controller and an environmental controller.

## Patentansprüche

1. Ein Verfahren zur Durchführung von Netzwerkrouting in einem System umfassend einen ersten Knoten (33), einen zweiten Knoten (19) und einen dritten Knoten (17), wobei der genannte erste Knoten (33) eine erste Verbindung (29) zum genannten zweiten Knoten (19) sowie eine zweite Verbindung (31) zum genannten dritten Knoten (17) aufweist und wobei der genannte zweite Knoten (19) und der genannte dritte Knoten (17) durch ein Netzwerk (21) verbunden sind,
das Verfahren umfasst folgende Schritte:
a) das periodische Kommunizieren zwischen dem genannten ersten Knoten (33) und dem genannten zweiten Knoten (19) oder genannten dritten Knoten (17) über mindestens die genannte erste Verbindung (29) und dadurch die Feststellung eines Status der Netzwerkverbindung zwischen dem genannten ersten Knoten (33) und dem genannten zweiten Knoten (19) oder dritten Knoten (17); und
**gekennzeichnet durch** das genannte Verfahren, einschließlich
b) das Tauschen der Rollen der genannten ersten (29) und genannten zweiten (31) Verbindung, wenn der genannte, in genanntem Schritt (a) festgestellte Status der Netzwerkverbindung nicht akzeptabel ist, um neue erste und zweite Verbindungen (31, 29) zu erstellen, und das Senden einer Nachricht mit einer Absenderadresse des genannten ersten Knotens (33) an den genannten zweiten Knoten (19) über die genannte neue erste Netzwerkverbindung (31), wobei die genannte Absenderadresse der genannten Nachricht es den genannten Netzwerkknoten erleichtert, über das Routing an den genannten ersten Knoten (33) über die genannte neue erste Verbindung (31) zu erfahren.

2. Das Verfahren nach Anspruch 1, wobei der genannte erste Knoten (33) einen ersten Port aufweist, der mit der genannten ersten Verbindung (29) verbunden ist, und einen zweiten Port, der mit der genannten zweiten Verbindung (31) verbunden ist, wobei der erste Port eine erste Netzwerkadresse aufweist, der zweite Port eine zweite Netzwerkadresse aufweist und der genannte erste Knoten (33) eine Systemnetzwerkadresse aufweist, wobei die genannte periodische Kommunikation vom genannten ersten Port des genannten ersten Knotens (33) mit der Absenderadresse des genannten ersten Ports übertragen wird.

3. Das Verfahren nach Anspruch 2, wobei die genannte Absenderadresse der genannten gesendeten Nachricht des genannten Schrittes (b) die genannte Systemnetzwerkadresse des genannten ersten Knotens (33) umfasst.

4. Das Verfahren nach Anspruch 3, wobei die genannte periodische Kommunikation zwischen dem genannten ersten Knoten (33) und dem genannten zweiten Knoten (19) oder dem genannten dritten Knoten (17) eine Ping-Nachricht umfasst, die die genannte erste Netzwerkadresse des genannten ersten Ports als Absenderadresse der genannten Ping-Nachricht aufweist, sowie optional entweder
(a) die genannte Ping-Nachricht den genannten zweiten Knoten (19) zum Ziel hat;
(b) die genannte Ping-Nachricht den genannten dritten Knoten (17) zum Ziel hat;
(c) wenn die genannte Ping-Nachricht erfolglos ist, eine Ping-Nachricht vom genannten zweiten Port zum jeweils anderen des genannten zweiten Knotens (19) und genannten dritten Knotens (17) gesendet wird und, weiterhin optional, wenn die genannte Ping-Nachricht vom genannten zweiten Port an den genannten anderen des genannten zweiten Knotens (19) und des genannten dritten (17) Knotens erfolgreich ist, das genannte Verfahren das Durchführen des genannten Rollentauschs der genannten ersten und zweiten Verbindungen (29,31) und das genannte Versenden einer Ping-Nachricht des genannten zweiten Knotens (19) über die genannte neue erste Verbindung (29) des genannten Schrittes 1(b) aus Anspruch 1 umfaßt.

5. Das Verfahren nach Anspruch 2, das weiterhin das Senden einer Ping-Nachricht vom genannten zweiten Port mit dessen Absenderadresse an den anderen des genannten zweiten Knotens (19) und genannten dritten Knotens (17) zur Feststellung eines Status der Netzwerkverbindung zwischen diesen aufweist.

6. Das Verfahren nach Anspruch 1, wobei der erste Knoten ein Computer (33) ist, der zweite Knoten ein erster Netzwerkschalter (19) ist und der dritte Knoten ein zweiter Netzwerkschalter (17) ist und wobei die erste Verbindung eine aktive Verbindung (29) ist und die zweite Verbindung eine Backup-Verbindung (31) ist, wobei das Verfahren aufweist:
(a) das periodische Pinging des genannten ersten Netzwerkschalters (19) durch Übertragung einer Ping-Nachricht, die für den genannten ersten Netzwerkschalter (19) bestimmt ist, über die genannte aktive Verbindung (29), wobei die genannte Ping-Nachricht die Adresse eines Ports des genannten Computers aufweist, der mit der genannten aktiven Verbindung (29) verbunden ist; und
(b) das Tauschen der Rollen der genannten aktiven Verbindung und Backup-Verbindungen (29, 31), wenn die genannte Ping-Nachricht erfolglos und die genannte Backup-Verbindung (31) verfügbar ist, um neue aktive und Backup-Verbindungen (29, 31) zu erstellen, und das Versenden einer Ping-Nachricht mit der Absenderadresse des genannten Computersystems an den genannten ersten Netzwerkschalter (19) über die genannte neue aktive Verbindung (31), wobei die genannte Absenderadresse der genannten Ping-Nachricht es den genannten Netzwerkknoten erleichtert, über das Routing an den genannten Computer über die genannte neue aktive Verbindung (31) zu erfahren, wobei sich die genannte Adresse des genannten Computersystems von der genannten Adresse des genannten Ports unterscheidet.

7. Ein System zur Durchführung von Netzwerk (21)-Routing umfassend einen ersten Knoten (33), einen zweiten Knoten (19) und einen dritten Knoten (17), wobei der genannte erste Knoten (33) eine erste Verbindung (29) zu dem genannten zweiten Knoten (19) sowie eine zweite Verbindung (31) zu dem genannten dritten Knoten (17) aufweist.
aufweisend
(a) Vorrichtung zur periodischen Kommunikation zwischen dem genannten ersten Knoten (33) und dem genannten zweiten Knoten (19) und dem genannten dritten Knoten (17) über mindestens die genannte erste Verbindung (29) und dadurch die Feststellung eines Status der Netzwerkverbindung zwischen dem genannten ersten Knoten (33) und dem genannten zweiten Knoten (19) oder dritten Knoten (17);
**gekennzeichnet durch** das genannte System, einschließlich
(b) Vorrichtung zur Feststellung, ob die genannte, im genannten Schritt (a) festgestellte Netzwerkverbindung unakzeptabel ist, und wenn ja, zum Tauschen der Rollen der genannten ersten und genannten zweiten Verbindungen (29, 31), um eine neue erste und zweite Verbindung (31, 29) zu schaffen, und zum Versenden einer Nachricht mit der Absenderadresse des genannten ersten Knotens (33) an den genannten zweiten Knoten (19) über die genannten neue erste Netzwerkverbindung (31), wobei die genannte Absenderadresse der genannten Nachricht es den genannten Netzwerkknoten erleichtert, über das Routing an den genannten ersten Knoten (33) über die genannte neue erste Verbindung (31) zu erfahren.

8. Das System nach Anspruch 7, wobei der genannte erste Knoten (33) einen Computer umfasst.

9. Das System nach Anspruch 8 und entweder:
(a) des Weiteren einen Link-Manager (33), der an den genannten Computer angeschlossen ist, wobei der genannte Link-Manager (33) die Verbindung zwischen dem genannten Computer und den genannten ersten und zweiten Verbindungen (29, 31) herstellt und optional entweder:
(i) wobei der genannte Link-Manager (33) in den genannten Computer integriert ist und, des Weiteren optional, ist der genannte Link-Manager (33) auf der Hauptplatine des genannten Computers angeordnet;
(ii) wobei der genannte Link-Manager (33) auf einer Erweiterungsplatine des genannten Computers angeordnet ist; oder
(iii) wobei der genannte Link-Manager (33) nicht in den genannten Computer integriert ist;
(b) wobei der genannte Computer einen Anwenderarbeitsplatz umfasst; oder
(c) wobei der genannte Computer einen Industriecontroller oder einen Umweltcontroller umfasst.

## Revendications

1. Procédé de gestion du routage d'un réseau dans un système comprenant un prcmicr nocud (33), un dcuxicmc nocud (19) et un troisième noeud (17). dans lequel ledit premier noeud (33) a une connexion primaire (29) audit deuxième noeud (19) et une connexion sccondaire (31) audit troisième noeud (17). dans lequel ledit deuxième noeud (19) et ledit troisième noeud (17) sont connectés par un réseau (21), le procédé comprenant l'étape consistant à :
(a) communiquer de façon périodique entre ledit premier noeud (33) et l'un dudit deuxième noeud (19) et dudit troisième noeud (17) par l'intermédiaire d'au moins ladite connexion primaire (29) et déterminer ainsi un état de connectivité du réseau entre ledit premier nocud (33) et ledit un desdits deuxième nceud (19) et troisième noeud (17) ; et
**caractérisé en ce que** ledit procédé comprend :
(b) si ledit état de connectivité du réseau déterminé lors de ladite étape (a) est inacceptable, l'échange des rôles desdites connexions primaire (29) et secondaire (31) pour établir de nouvelles connexions primaire et secondaire (31, 29) et l'envoi d'un message avec une adresse d'origine dudit premier noeud (33) audit deuxième noeud (19) par l'intermédiaire de ladite nouvelle connexion de réseau primaire (31), dans lequel ladite adresse d'origine dudit message facilite l'apprentissage desdits noeuds du réseau concernant le routage vers ledit premier noeud (33) par l'intermédiaire de ladite nouvelle connexion primaire (31).

2. Procédé selon la revendication 1, dans lequel ledit premier noeud (33) comprend un premier port connecté à ladite connexion primaire (29) et un second port connecté à ladite connexion secondaire (31), ledit premier port ayant une première adresse de réscau, ledit second port ayant une seconde adresse de réseau et ledit premier noeud (33) ayant une adresse de réseau de système, dans lequel ladite communication périodique est transmise depuis ledit premier port dudit premier noeud (33) avec une adresse originale dudit premier port.

3. Procédé selon la revendication 2, dans lequel ladite adresse d'origine dudit message d'envoi de ladite étape (b) comprend ladite adresse de réseau de système dudit premier noeud (33).

4. Procédé selon la revendication 3, dans lequel ladite communication périodique entre ledit premier noeud (33) et l'un dudit deuxième noeud (19) et dudit troisième noeud (17) comprend un message utilitaire Ping ayant ladite première adresse de réseau dudit premier port comme adresse d'origine dudit message utilitaire Ping, et, en option, soit :
(a) dans lequel ledit message utilitaire Ping a une destination dudit deuxième noeud (19) ;
(b) dans lequel ledit message utilitaire Ping a une destination dudit troisième noeud (17) ;
(c) dans lequel si ledit utilitaire Ping échoue, un utilitaire Ping est envoyé depuis ledit second port vers l'autre dudit deuxième noeud (19) et dudit troisième noeud (17), et toujours en option, dans lequel si ledit utilitaire Ping en provenance dudit second port vers l'autre dudit deuxième noeud (19) et dudit troisième noeud (17) réussit, ledit procédé comprend la réalisation dudit échange de rôles desdites connexions primaire et secondaire (29, 31) et ladite transmission d'utilitaire Ping dudit deuxième noeud (19) par l'intermédiaire de ladite nouvelle connexion primaire (29) de ladite étape 1(b) de la revendication 1.

5. Procédé selon la revendication 2, comprenant en outre l'envoi d'un message utilitaire Ping depuis ledit second port, avec une adresse d'origine de celui-ci, vers l'autre dudit deuxième noeud (19) et dudit troisième noeud (17) pour déterminer un état de connectivité du réseau.

6. Procédé selon la revendication 1, dans lequel le premier noeud est un ordinateur (33), le deuxième noeud est un premier commutateur de réseau (19), le troisième noeud est un second commutateur de réseau (17), la connexion primaire est une connexion active (29), et la connexion secondaire est une connexion de secours (31), ledit procédé comprenant :
(a) la transmission périodique d'utilitaire Ping audit premier commutateur de réseau (19) en transmettant un message utilitaire Ping à destination dudit premier commutateur de réseau (19) par l'intermédiaire de ladite connexion active (29), ledit utilitaire Ping ayant une adresse d'un port dudit ordinateur connecté à ladite connexion active (29) ; et
(b) si ledit utilitaire Ping échoue, et que ladite connexion de secours (31) est disponible, l'échange des rôles desdites connexions active et de secours (29, 31) pour établir de nouvelles connexions active et de secours (31, 29) et l'envoi d'un utilitaire Ping avec une adresse d'origine dudit système d'ordinateur audit premier commutateur de réseau (19) par l'intermédiaire de ladite nouvelle connexion active (31) dans lequel ladite adresse d'origine dudit utilitaire Ping facilite l'apprentissage desdits noeuds du réseau concernant le routage vers ledit ordinateur par l'intermédiaire de ladite nouvelle connexion active (31), ladite adresse dudit système d'ordinateur étant différente de ladite adresse dudit port.

7. Système de gestion du routage d'un réseau (21) comprenant un premier noeud (33), un deuxième noeud (19) et un troisième noeud (17), dans lequel ledit premier noeud (33) a une connexion primaire (29) audit deuxième noeud (19) et une connexion secondaire (31) audit troisième noeud (17), comprenant :
(a) des moyens pour communiquer de façon périodique entre ledit premier noeud (33) et l'un dudit deuxième noeud (19) et dudit troisième noeud (17) par l'intermédiaire d'au moins ladite connexion primaire (29) et déterminer ainsi un état de connectivité du réseau entre ledit premier noeud (33) et ledit un desdits deuxième noeud (19) et troisième noeud (17) ;
**caractérisé en ce que** ledit système comprend :
(b) des moyens pour déterminer si ledit état de connectivité du réseau déterminé au niveau de ladite étape (a) est inacceptable, et si c'est le cas, pour échanger les rôles desdites connexions primaire et secondaire (29, 31) pour établir de nouvelles connexions primaire et secondaire (31, 29) et pour envoyer un message avec une adresse d'origine dudit premier noeud (33) audit deuxième noeud (19) par l'intermédiaire de ladite nouvelle connexion de réseau primaire (31), dans lequel ladite adresse d'origine dudit message facilite l'apprentissage desdits noeuds du réseau concernant le routage vers ledit premier noeud (33) par l'intermédiaire de ladite nouvelle connexion primaire (31).

8. Système selon la revendication 7, dans lequel ledit premier noeud (33) comprend un ordinateur.

9. Système selon la revendication 8, et soit :
(a) comprenant en outre un gestionnaire de liaison (33) relié audit ordinateur, ledit gestionnaire de liaison (33) fournissant une connectivité entre ledit ordinateur et lesdites connexions primaire et secondaire (29, 31 ) et, en option, soit :
(i) dans lequel ledit gestionnaire de liaison (33) est intégré audit ordinateur et, toujours en option, dans lequel ledit gestionnaire de liaison (33) est sur la carte principale dudit ordinateur ;
(ii) dans lequel ledit gestionnaire de liaison (33) est sur une carte d'extension dudit ordinateur ; ou
(iii) dans lequel ledit gestionnaire de liaison (33) est externe audit ordinateur ;
(b) dans lequel ledit ordinateur comprend une station de travail d'opérateur ; ou
(c) dans lequel ledit ordinateur comprend l'un d'un contrôleur industriel et d'un contrôleur environnemental.
